# EUROPEAN PATENT SPECIFICATION

(11) **EP 2 835 561 B1**
(45) Date of publication and mention of the grant of the patent: **17.04.2019**
(21) Application number: 14179830.6
(22) Date of filing: 05.08.2014
(51) Int. Cl.: F16F 15/134

(54) **Torque fluctuation absorbing device**
Vorrichtung zur Dämpfung einer Drehmomentschwankung
Appareil d'absorption de fluctuation de couple

(30) Priority: 08.08.2013 JP 2013165363
(43) Date of publication of application: 11.02.2015
(73) Proprietor: AISIN SEIKI KABUSHIKI KAISHA, Kariya-shi, Aichi 448-8650 (JP)
(72) Inventor: Oyama, Tsuyoshi, Kariya-shi, Aichi 448-8650 (JP); Miyazawa, Tetsuhiro, Kariya-shi, Aichi 448-8650 (JP); Ebata, Masaru, Kariya-shi, Aichi 448-8650 (JP); Sadakari, Shuji, Kariya-shi, Aichi 448-8650 (JP); Mori, Masato, Kariya-shi, Aichi 448-8650 (JP); Kawazoe, Hiroshi, Kariya-shi, Aichi 448-8650 (JP)
(74) Representative: Kramer Barske Schmidtchen Patentanwälte PartG mbB

(56) References cited:
- DE-A1- 4 117 580
- DE-U1- 9 007 380
- FR-A1- 2 882 579
- GB-A- 2 281 767

## Description

### TECHNICAL FIELD

This disclosure relates to a torque fluctuation absorbing device which absorbs fluctuating torque between rotating members.

### BACKGROUND DISCUSSION

In a vehicle having a manual transmission, a torque fluctuation absorbing device is provided on a power transmission path between an engine and the transmission and absorbs (suppresses) fluctuating torque of the engine. The torque fluctuation absorbing device includes a damper portion which absorbs fluctuating torque by elastic force. As the damper portion, a first rotating member, a second rotating member that is disposed to rotate relative to the first rotating member, a coil spring which absorbs torsion generated between the first rotating member and the second rotating member, and the like are provided. The torque fluctuation absorbing device is provided on a flywheel which becomes a friction surface of a clutch disc on the power transmission path between the engine and the transmission. In the torque fluctuation absorbing device, there is concern that heat generated in the friction surface between the flywheel and the clutch disc may be transferred to the torque fluctuation absorbing device and the life span of the device may be reduced.

In JP H06-280940A, a torque fluctuation absorbing device is disclosed in which, in order to extend the life span of the device, a cooling air passage having a predetermined shape is formed between a friction surface that cooperates with a clutch disc facing and a bearing portion in a second inertial body on a transmission input shaft side, and an insulation portion is provided between the bearing portion and the second inertial body. The cooling air passage generates convection in the space between a first inertial body and the second inertial body due to the shape thereof, and suppresses the temperature increase of the first inertial body.

However, in the cooling structure described in JP 6-280940A, the temperature increase is insufficiently suppressed due to heat from the second inertial body, and constituent members having the first inertial body embedded therein are exposed to a high temperature. Therefore, there is concern of performance degradation, degeneration, or destruction.

Furthermore, GB 2 281 767 A discloses a torque transmitting apparatus for use in motor vehicles, comprising a flywheel assembly connectable with an engine of a vehicle and with a transmission of the vehicle by a friction clutch, said flywheel assembly and said friction clutch together constituting a preassembled unit connectable to a rotary output element of the engine, the preassembled unit including screws for connecting the flywheel assembly to the output element, and means for confining the screws in the unit against loss.

### SUMMARY

Thus, a need exists for a torque fluctuation absorbing device capable of avoiding performance degradation, degeneration, or destruction due to heat.

This object is solved by a torque fluctuation absorbing device according to claim 1. Further developments are given in the dependent claims.

According to an aspect of this disclosure, since heat is not transferred from the second rotating member to the first rotating member, members of the damper portion which are accommodated in the first rotating member and are vulnerable to heat, can be protected from heat, resulting in an increase in the life span of the device.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view schematically illustrating the configuration of a torque fluctuation absorbing device according to Embodiment 1 disclosed here;
Fig. 2 is a cross-sectional view schematically illustrating the configuration of a torque fluctuation absorbing device according to Embodiment 2, which does not show all claimed features,disclosed here;
Fig. 3 is a plan view schematically illustrating the configuration of a plate of a second flywheel in a torque fluctuation absorbing device according to Embodiment 3 disclosed here;
Fig. 4 is a cross-sectional view (a cross-sectional view corresponding to line IV-IV of Fig. 3) schematically illustrating the configuration of the torque fluctuation absorbing device according to Embodiment 3 disclosed here;
Fig. 5 is a plan view schematically illustrating the configuration of a plate of a second flywheel in a torque fluctuation absorbing device according to Embodiment 4 disclosed here;
Fig. 6 is a cross-sectional view (a cross-sectional view corresponding to line VI-VI of Fig. 5) schematically illustrating the configuration of the torque fluctuation absorbing device according to Embodiment 4 disclosed here; and
Fig. 7 is a cross-sectional view schematically illustrating the configuration of a torque fluctuation absorbing device according to Embodiment 5 disclosed here.

### DETAILED DESCRIPTION

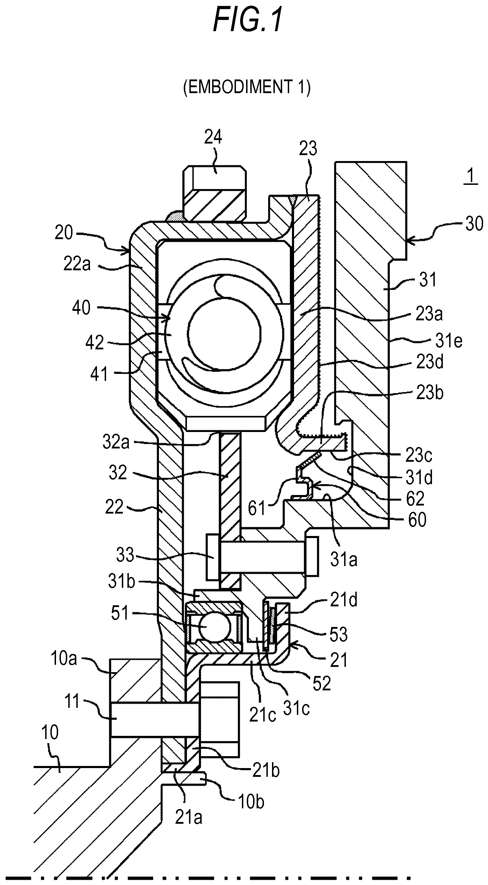

A torque fluctuation absorbing device according to an embodiment disclosed here includes: a first rotating member (20 of Fig. 1) which is rotatably disposed; a second rotating member (30 of Fig. 1) which is disposed to rotate relative to the first rotating member and has a friction surface (31e of Fig. 1) that is frictionally engaged with a predetermined member other than the first rotating member; a damper portion (40 of Fig. 1) which is accommodated in the first rotating member and absorbs fluctuating torque caused by torsion between the first rotating member and the second rotating member; and a heat transfer avoiding portion (23d of Fig. 1) which avoids a transfer of heat generated in the friction surface to the first rotating member.

In addition, in this application, elements that are denoted by reference numerals in the figure are only for facilitating understanding and are not intended to be limited to the illustrated forms.

### Embodiment 1

A torque fluctuation absorbing device according to Embodiment 1 disclosed here will be described with reference to the drawings. Fig. 1 is a cross-sectional view schematically illustrating the configuration of the torque fluctuation absorbing device according to Embodiment 1 disclosed here.

The torque fluctuation absorbing device 1 according to Embodiment 1 is a device which absorbs (suppresses) fluctuating torque caused by torsion between a first flywheel 20 and a second flywheel 30. The torque fluctuation absorbing device 1 includes a damper portion 40 in the first flywheel 20, which has a function of absorbing torsion and absorbs fluctuating torque between the first flywheel 20 and the second flywheel 30. The torque fluctuation absorbing device 1 is provided on a power transmission path between a crankshaft 10 of an engine and a clutch device (not illustrated).

The first flywheel 20 is an annular assembly which is connected to the crankshaft 10 of the engine. The first flywheel 20 transmits rotational power of the crankshaft 10 to the damper portion 40. The first flywheel 20 accommodates the damper portion 40 and a lubricant (for example, grease) therein, and a gap from the second flywheel 30 is sealed by a sealing member 60. The first flywheel 20 rotatably bears the second flywheel 30 via a ball bearing 51, and restricts the axial movement of the second flywheel 30 using the ball bearing 51, a sliding material 52, and a disc spring 53. The first flywheel 20 includes a support member 21, a plate 22, a plate 23, and a ring gear 24 as its constituent members.

The support member 21 is an annular member which rotatably supports the second flywheel 30. The support member 21 is fastened to a flange portion 10a of the crankshaft 10 by a bolt 11 together with the plate 22. Therefore, the support member 21 rotates integrally with the plate 22. The support member 21 includes a cylindrical portion 21a which is inserted into the outer circumference of a cylindrical portion 10b of the crankshaft 10. The cylindrical portion 21a is inserted into the inner circumference of the plate 23 and restricts the radial movement of the plate 23. The support member 21 includes an annular flange portion 21b which extends from the end portion of the cylindrical portion 21a on the clutch device side (on the right in Fig. 1) to the radially outer side. The flange portion 21b has a hole portion into which the screw portion of the bolt 11 is inserted. The flange portion 21b includes a cylindrical portion 21c which extends from the outer circumferential end portion thereof to the clutch device side (on the right in Fig. 1) in the axial direction. The cylindrical portion 21c rotatably bears the second flywheel 30 (a cylindrical portion 31b of a plate 31) via the ball bearing 51. The cylindrical portion 21c is press-fitted and fixed to the inner circumference of the inner race of the ball bearing 51. The support member 21 includes an annular flange portion 21d which extends from the end portion of the cylindrical portion 21c on the clutch device side (on the right in Fig. 1) to the radially outer side. The flange portion 21d restricts the axial movement of the second flywheel 30 (a flange portion 31c of the plate 31) via the sliding material 52 and the disc spring 53. The flange portion 21d supports the outer circumferential end portion of the disc spring 53.

The plate 22 is an annular member. The inner circumferential end portion of the plate 22 is disposed on the outer circumference of the cylindrical portion 21a of the support member 21. The inner circumferential portion of the plate 22 is interposed between the flange portion 21b of the support member 21 and the flange portion 10a of the crankshaft 10, and is fastened to the crankshaft 10 by the bolt 11 together with the support member 21. The plate 22 is separated from the outer race of the ball bearing 51. The outer circumferential portion of the plate 22 includes a bag-shaped accommodating portion 22a for accommodating seat members 41 and coil springs 42 of the damper portion 40. Both circumferential end surfaces of the accommodating portion 22a are able to come into contact with or be separated from a pair of seat members 41. The accommodating portion 22a comes into contact with both of the pair of seat members 41 when torsion does not occur in the damper portion 40, and comes into contact with one of the pair of seat members 41 when torsion occurs in the damper portion 40. The plate 22 is formed to cover the radially outer side of the damper portion 40. The outer circumferential surface of the plate 22 is inserted into the annular ring gear 24, and is fixed to the ring gear 24 by welding or the like. The entire circumference of the end portion of the plate 22 on the clutch device side (on the right in Fig. 1) is adhered to the plate 23 and is fixed to the plate 23 by welding or the like.

The plate 23 is an annular member. The entire circumference of the outer circumferential portion of the plate 23 is adhered to the plate 22 and is fixed to the plate 22 by welding or the like. Accordingly, the plate 23 and the plate 22 integrally rotate, and the lubricant in the first flywheel 20 does not leak from the joining portion of the plates 22 and 23. The intermediate portion of the plate 23 includes a bag-shaped accommodating portion 23a for accommodating the seat members 41 and the coil springs 42 of the damper portion 40. Both circumferential end surfaces of the accommodating portion 23a are able to come into contact with or be separated from the pair of seat members 41. The accommodating portion 23a comes into contact with both of the pair of seat members 41 when torsion does not occur in the damper portion 40, and comes into contact with one of the pair of seat members 41 when torsion occurs in the damper portion 40. The inner circumferential portion of the plate 23 includes a cylindrical portion 23b which extends to the clutch device side (on the right in Fig. 1). The cylindrical portion 23b is a component on the first flywheel 20 side for sealing the gap between the first flywheel 20 and the second flywheel 30. The cylindrical portion 23b extends to the vicinity of a recessed portion 31d of the plate 31 so as not to come into contact with the plate 31. The inner circumferential surface of the cylindrical portion 23b includes a sealing surface 23c which elastically comes into contact with a buffer 62 of the sealing member 60. The sealing surface 23c is finished to have a cylindrical surface which is flat in the axial direction. The surface (surface on the plate 31 side) of the plate 23 which faces the plate 31 as a radiant heat generating source includes a mirror surface portion 23d which is mirror-finished. The mirror surface portion 23d reflects the radiant heat generated from the plate 31 (the surface on the opposite side to the friction surface 31e) so as not to cause the radiant heat to be transferred to the damper portion 40 in the first flywheel 20.

The ring gear 24 is a ring-shaped member in which a gear is formed on the outer circumferential surface. The ring gear 24 is disposed on the outer circumference of the plate 22 and is fixed to the plate 22 by welding or the like.

The second flywheel 30 is an annular assembly which transmits rotational power of the damper portion 40 to the clutch device (not illustrated). The second flywheel 30 rotatably bears the first flywheel 20 via the ball bearing 51, and the axial movement thereof with respect to the first flywheel 20 is restricted by using the ball bearing 51, the sliding material 52, and the disc spring 53. The gap between the second flywheel 30 and the first flywheel 20 is sealed by the sealing member 60. The second flywheel 30 includes the plate 31, a disc 32, and a rivet 33 as its constituent members.

The plate 31 is an annular member. The outer circumferential portion of the plate 31 is connected to the clutch device (not illustrated) by a bolt and the like. The plate 31 includes the friction surface 31e which can be frictionally engaged with a clutch disc (not illustrated) in the clutch device at a predetermined position of the surface on the clutch device side (on the right in Fig. 1). The friction surface 31e is a frictional heat generating source. The plate 31 includes a sealing surface 31a which comes into pressing contact with the inner circumferential surface of a metal ring 61 of the sealing member 60 on the radially inner side from the cylindrical portion 23b of the plate 23. The sealing surface 31a is a cylindrical surface which is flat in the axial direction, and the metal ring 61 is press-fitted thereto. A portion of the plate 31 closer to the clutch device side (on the right in Fig. 1) in the axial direction than the sealing surface 31a and on the radially outer side includes the annular recessed portion 31d which is recessed toward the clutch device side (on the right in Fig. 1) in the axial direction. The tip end portion of the cylindrical portion 23b of the plate 23 is inserted into the recessed portion 31d so as not to come into contact with the recessed portion 31d. The plate 31 is connected to the disc 32 by the rivet 33 on the radially inner side from the sealing surface 31a. Therefore, the plate 31 rotates integrally with the disc 32. A portion of the plate 31 on the radially inner side from the rivet 33 includes the cylindrical portion 31b which extends toward the engine side (on the left in Fig. 1) in the axial direction. The cylindrical portion 31b is rotatably supported by the cylindrical portion 21c of the support member 21 via the ball bearing 51. The inner circumferential surface of the cylindrical portion 31b is press-fitted to the outer race of the ball bearing 51. The plate 31 includes the annular flange portion 31c which extends from a portion thereof on the radially inner side from the rivet 33 to the radially inner side. The flange portion 31c is disposed between the ball bearing 51 and the sliding material 52 and is formed so as not to come into contact with the inner race of the ball bearing 51. The flange portion 31c is biased toward the ball bearing 51 from the sliding material 52 by the disc spring 53.

The disc 32 is an annular member. The disc 32 is disposed on the outer circumference of the cylindrical portion 31b of the plate 31. The inner circumferential portion of the disc 32 is connected to the plate 31 by the rivet 33. Therefore, the disc 32 rotates integrally with the plate 31. The outer circumferential portion of the disc 32 includes a window portion 32a as a cutout for accommodating the seat members 41 and the coil springs 42 of the damper portion 40. Both circumferential end surfaces of the window portion 32a are able to come into contact with or be separated from the pair of seat members 41. The window portion 32a comes into contact with both of the pair of seat members 41 when torsion does not occur in the damper portion 40, and comes into contact with one of the pair of seat members 41 when torsion occurs in the damper portion 40.

The rivet 33 is a member for connecting the plate 31 to the disc 32.

The damper portion 40 receives rotational power of the rotating shaft on the engine side and outputs the received rotational power to the clutch device. A plurality of coil springs 42 are periodically provided on one circumference of the damper portion 40. The damper portion 40 includes the seat members 41 and the coil springs 42 as its constituent members.

The seat members 41 are accommodated in the accommodating portions 22a and 23a of the plates 22 and 23 and the window portion 32a of the disc 32, and are arranged between the circumferential end surfaces of the accommodating portions 22a and 23a and the window portion 32a and the end portions of the coil springs 42. The seat members 41 may be made of a resin to reduce wear of the coil springs 42.

The coil springs 42 are accommodated in the accommodating portions 22a and 23a of the plates 22 and 23 and the window portion 32a of the disc 32, and come into contact with the pair of seat members 41 which are arranged on both ends thereof. The coil springs 42 contract when torsion (torsion between the plates 22 and 23 and the disc 32) occurs in the damper portion 40.

The ball bearing 51 is an annular bearing member for rotatably supporting the plate 31 against the support member 21. A plurality of balls are interposed between the outer race and the inner race of the ball bearing 51. The outer race is press-fitted to the inner circumference of the cylindrical portion 31b of the plate 31. The inner race is press-fitted to the outer circumference of the cylindrical portion 21c of the support member 21.

The sliding material 52 is an annular member for restricting the axial movement of the plate 31. The sliding material 52 is disposed between the flange portion 31c of the plate 31 and the flange portion 21d of the support member 21. The sliding material 52 is biased from the flange portion 21d side of the support member 21 by the disc spring 53, and comes into pressing contact with the flange portion 31c of the plate 31 to slide thereon. The sliding material 52 also has a function of generating hysteresis between the first flywheel 20 and the second flywheel 30.

The disc spring 53 is a disc-shaped spring which is disposed between the flange portion 21d of the support member 21 and the sliding material 52 and biases the flange portion 31c of the plate 31 toward the ball bearing 51 side via the sliding material 52.

The sealing member 60 is an annular member which seals the gap between the first flywheel 20 and the second flywheel 30. The sealing member 60 is constituted by the metal ring 61 and the buffer 62. The metal ring 61 is an annular member which is formed in a predetermined shape by a press. The metal ring 61 is press-fitted to the outer circumference of the sealing surface 31a of the plate 31. Therefore, the metal ring 61 is fixed to a predetermined position of the sealing surface 31a of the plate 31. The buffer 62 is an annular portion which is fixed to the radially outer end portion of the metal ring 61 and extends toward the radially outer side. The buffer 62 is, for example, made of rubber or a resin which is elastically deformable. The outer circumferential end portion of the buffer 62 elastically comes into contact with the sealing surface 23c of the plate 23.

According to Embodiment 1, radiant heat generated by the friction surface 31e of the plate 31 which is frictionally engaged with the clutch disc is reflected by the mirror surface portion 23d of the plate 23 in the first flywheel 20, and thus heat (including the radiant heat) is not allowed to be transferred to the first flywheel 20. Therefore, members (for example, the seat members 41 in the damper portion 40) which are accommodated in the first flywheel 20 and are vulnerable to heat are protected from heat, resulting in an increase in the life span of the device.

### Embodiment 2

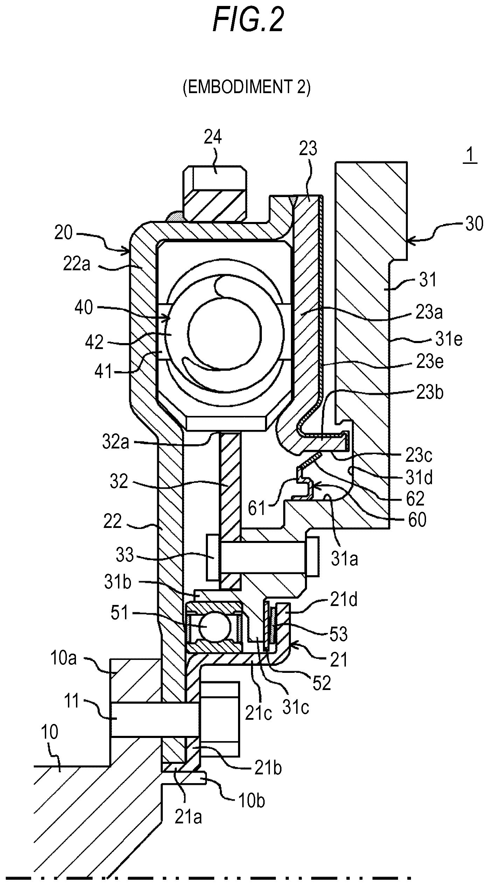

A torque fluctuation absorbing device according to Embodiment 2 disclosed here will be described with reference to the drawings. Fig. 2 is a cross-sectional view schematically illustrating the configuration of the torque fluctuation absorbing device according to Embodiment 2 disclosed here.

Embodiment 2 is a modification example of Embodiment 1, and instead of the mirror surface portion (23d in Fig. 1), a shielding plate 23e is provided on the surface (the surface that receives the radiant heat from the plate 31) of the plate 23 that faces the plate 31 in the first flywheel 20. The other configurations are the same as in Embodiment 1.

The shielding plate 23e shields (blocks) radiant heat generated from the plate 31 (the surface on the opposite side to the friction surface 31e) so that the radiant heat is not transferred to the damper portion 40 in the first flywheel 20. The surface (the surface that receives the radiant heat from the plate 31) of the shielding plate 23e that faces the plate 31 may also be finished to have a mirror surface. In addition, the shielding plate 23e is configured to be integrated with the body of the plate 23 in Fig. 2, but may be separated from the body of the plate 23. In the case where the shielding plate 23e is separated from the body of the plate 23, the shielding plate 23e may be fixed to the body of the plate 23 by caulking or bolt fastening.

According to Embodiment 2, the same effect as Embodiment 1 is achieved.

### Embodiment 3

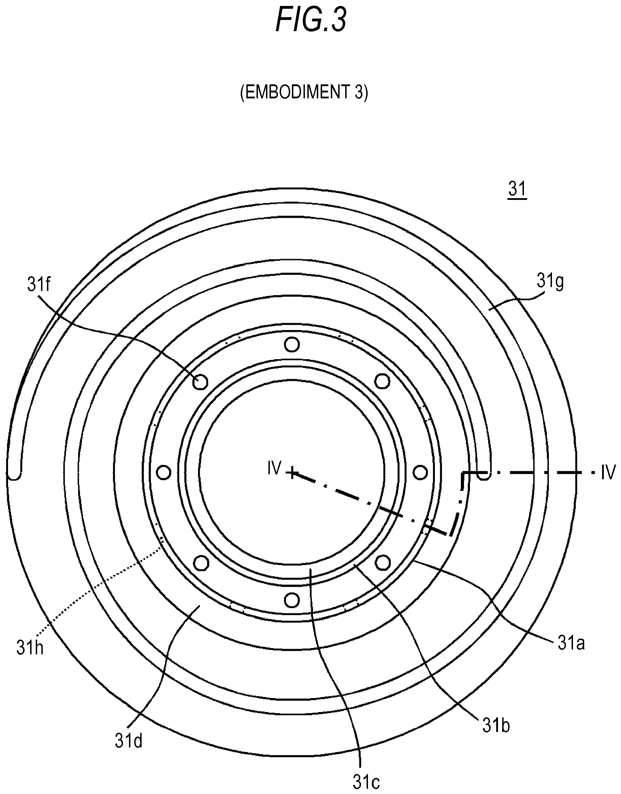

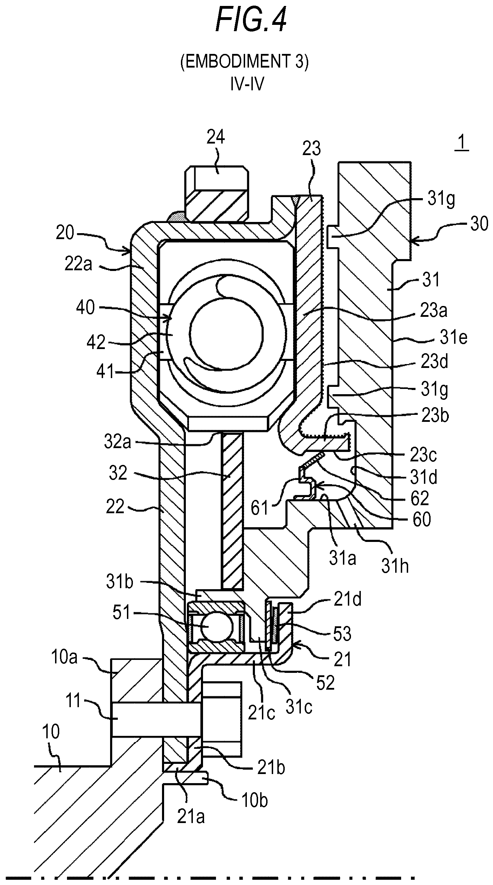

A torque fluctuation absorbing device according to Embodiment 3 disclosed here will be described with reference to the drawings. Fig. 3 is a plan view schematically illustrating the configuration of the plate 31 of the second flywheel in the torque fluctuation absorbing device according to Embodiment 3 disclosed here. Fig. 4 is a cross-sectional view (a cross-sectional view corresponding to line IV-IV of Fig. 3) schematically illustrating the configuration of the torque fluctuation absorbing device according to Embodiment 3 disclosed here.

Embodiment 3 is a modification example of Embodiment 1. In this embodiment, in order to accelerate dissipation of heat accumulated in the space between the first flywheel 20 (the plate 23) and the second flywheel 30 (the plate 31), a spiral protrusion 31g is provided on the surface of the plate 31 on the opposite side to the friction surface 31e in the second flywheel 30, and a plurality of vent holes 31h are provided in a portion of the plate 31 on the radially inner side from the protrusion 31g so that convection (wavy convection) occurs in the space between the first flywheel 20 (the plate 23) and the second flywheel 30 (the plate 31) to dissipate heat. The other configurations are the same as in Embodiment 1. In addition, the configurations of the protrusion 31g and the vent holes 31h of Embodiment 3 may be also applied to Embodiment 2. In addition, rivet hole portions 31f into which the rivet (33 in Fig. 1) for connecting the plate 31 to the disc 32 is allowed to be inserted are formed in the plate 31.

The protrusion 31g is a spiral portion which protrudes from the surface of the plate 31 on the opposite side to the friction surface 31e in the second flywheel 30 by a predetermined height. As the plate 31 rotates, the protrusion 31g generates convection of gas on the radially inner side from the protrusion 31g so as to discharge the gas to the radially outer side from the protrusion 31g. By the convection, the heat accumulated in the space between the first flywheel 20 (the plate 23) and the second flywheel 30 (the plate 31) is dissipated. In addition, instead of forming the protrusion 31g in the plate 31, a groove portion which generates convection (wavy convection) in the space between the first flywheel 20 (the plate 23) and the second flywheel 30 (the plate 31) may be formed. By providing the protrusion 31g or the groove portion, the surface area of the second flywheel 30 is increased, thereby reducing the temperature of the heat generating source. In order to increase the surface area and accelerate heat dissipation, surface accuracy of the surface of the plate 31 on the opposite side to the friction surface 31e may be reduced.

The vent hole 31h is a through-hole formed in the second flywheel 30, which causes the outside of the second flywheel 30 to communicate with the space between the first flywheel 20 (the plate 23) and the second flywheel 30 (the plate 31). As the plate 31 rotates, by convection (convection in which gas on the radially inner side from the protrusion 31g is discharged to the radially outer side) generated by the protrusion 31g, gas outside the second flywheel 30 flows into the space between the first flywheel 20 (the plate 23) and the second flywheel 30 (the plate 31) through the vent hole 31h.

According to Embodiment 3, the same effect as Embodiment 1 is achieved. In addition, since the spiral protrusion 31g is provided on the surface of the plate 31 on the opposite side to the friction surface 31e in the second flywheel 30 and the plurality of vent holes 31h are provided in the portion of the plate 31 on the radially inner side from the protrusion 31g, dissipation of the heat in the space between the second flywheel 30 and the first flywheel 20 is accelerated, and the first flywheel 20 is prevented from being exposed to a high temperature for a long period of time. Therefore, the structures are protected, resulting in an increase in the life span of the device.

### Embodiment 4

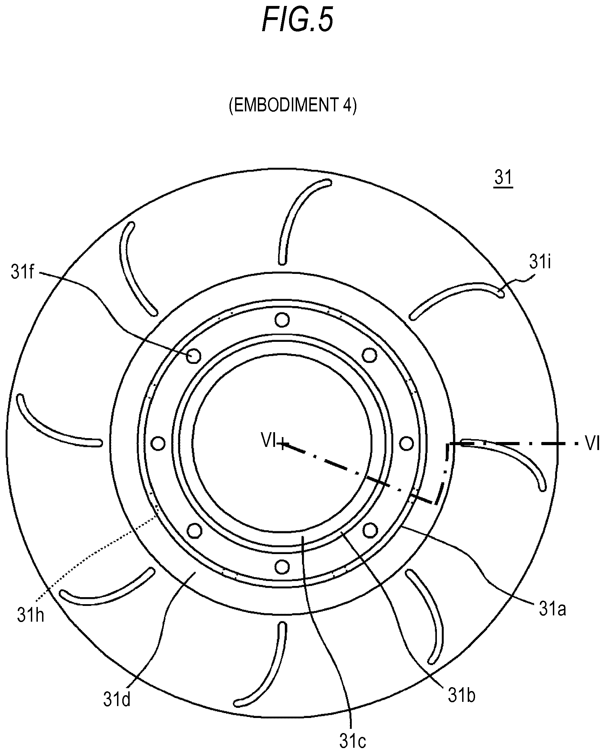

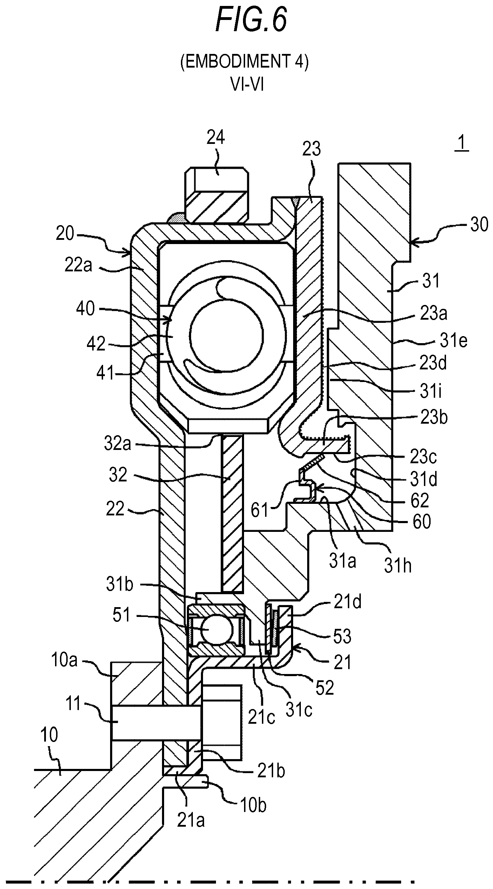

A torque fluctuation absorbing device according to Embodiment 4 disclosed here will be described with reference to the drawings. Fig. 5 is a plan view schematically illustrating the configuration of the plate 31 of the second flywheel in the torque fluctuation absorbing device according to Embodiment 4 disclosed here. Fig. 6 is a cross-sectional view (cross-sectional view corresponding to line VI-VI of Fig. 5) schematically illustrating the configuration of the torque fluctuation absorbing device according to Embodiment 4 disclosed here.

Embodiment 4 is a modification example of Embodiment 3. In this embodiment, the shape of a protrusion 31i in the plate 31 is a radially rotating shape. The other configurations are the same as in Embodiment 3. In addition, the configurations of the protrusion 31i and the vent hole 31h of Embodiment 4 may also be applied to Embodiment 2.

A plurality of the protrusions 31i are formed in the plate 31 and protrude by a predetermined height from the surface of the plate 31 on the opposite side to the friction surface 31e in the second flywheel 30. As the plate 31 rotates, the protrusion 31i generates convection of gas on the radially inner side from the protrusion 31i so as to discharge the gas to the radially outer side from the protrusion 31i. By the convection, the heat accumulated in the space between the first flywheel 20 (the plate 23) and the second flywheel 30 (the plate 31) is dissipated. In addition, instead of forming the protrusion 31i in the plate 31, a groove portion which generates convection (wavy convection) in the space between the first flywheel 20 (the plate 23) and the second flywheel 30 (the plate 31) may be formed.

According to Embodiment 4, the same effect as Embodiment 3 is achieved.

### Embodiment 5

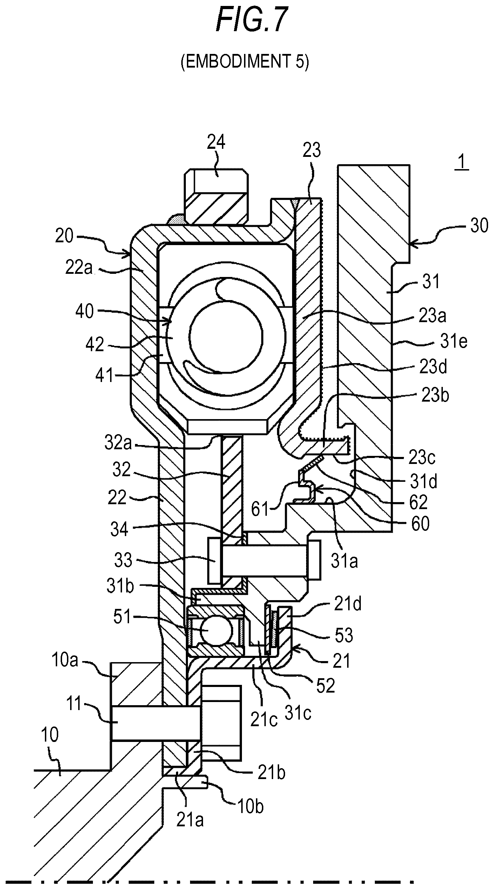

A torque fluctuation absorbing device according to Embodiment 5 disclosed here will be described with reference to the drawings. Fig. 7 is a cross-sectional view schematically illustrating the configuration of the torque fluctuation absorbing device according to Embodiment 5 disclosed here.

Embodiment 5 is a modification example of Embodiment 1. In this embodiment, a heat insulation material 34 is interposed at least between portions of the plate 31 and the disc 32 which abut on each other, in order to block (suppress) the transfer of frictional heat generated in the friction surface 31e from the friction surface 31e in the second flywheel 30 to the damper portion 40 through a heat transfer path (the body of the plate 31 and the disc 32) as conductive heat to the damper portion 40. The thermal conductivity of the heat insulation material 34 is less than the thermal conductivity of a material (for example, cast iron) used in the second flywheel 30 (the plate 31 and the disc 32). In addition, a ceramic may be used in the heat insulation material 34. The other configurations are the same as in Embodiment 1. In addition, the configuration of Embodiment 5 having the heat insulation material 34 may also be applied to Embodiments 2 to 4. According to Embodiment 5, the same effect as Embodiment 1 is achieved, and the transfer of the frictional heat generated in the friction surface 31e to the member connected to the plate 31 may be physically reduced.

In addition, changes and adjustments of the embodiments and examples can be made on the basis of the technical spirit without departing from the scope of the entire disclosure (including the appended claims) of the invention. In addition, various disclosed elements can be combined or selected without departing from the scope of the claims of the invention. That is, it is natural that the invention includes various alterations and modifications that can be understood by those skilled in the art according to the entire disclosure and the technical spirit including the claims.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A torque fluctuation absorbing device (1) comprising:
a first rotating member (20) which is rotatably disposed;
a second rotating member (30) which is disposed to rotate relative to the first rotating member (20) and has a friction surface (31e) that is frictionally engaged with a predetermined member other than the first rotating member (20);
a damper portion (40) which is accommodated in the first rotating member (20) and absorbs fluctuating torque caused by torsion between the first rotating member (20) and the second rotating member (30); and
a heat transfer avoiding portion (23d) which avoids a transfer of heat generated in the friction surface (31e) to the first rotating member (20), **characterized in that**
a surface of the first rotating member (20) which faces a portion of the second rotating member (30) in which radiant heat is generated due to heat generated in the friction surface (31e), includes the heat transfer avoiding portion,
wherein the heat transfer avoiding portion (23d) is a mirror surface.

2. The torque fluctuation absorbing device according to claim 1, further comprising:
a heat dissipation accelerating portion (31g, 31h, 31i) which is disposed between the second rotating member (30) and the first rotating member (20) and accelerates dissipation of the heat generated in the friction surface (31e).

3. The torque fluctuation absorbing device according to claim 2,
wherein the heat dissipation accelerating portion (31g, 31h, 31i) has a structure which generates convection between the second rotating member (30) and the first rotating member (20).

4. The torque fluctuation absorbing device according to claim 2 or 3,
wherein the heat dissipation accelerating portion (31g, 31h, 31i) is a structure which generates convection between the second rotating member (30) and the first rotating member (20).

5. The torque fluctuation absorbing device according to any one of claims 2 to 4,
wherein the heat dissipation accelerating portion (31g, 31h, 31i) is provided in the surface of the second rotating member (30) which faces the first rotating member (20).

6. The torque fluctuation absorbing device according to any one of claims 2 to 5,
wherein the heat dissipation accelerating portion (31g, 31h, 31i) is a protrusion or a groove portion which is provided in the second rotating member (30).

7. The torque fluctuation absorbing device according to claim 6,
wherein the second rotating member (30) has an annular shape so that convection which is guided by the protrusion (31g, 31i) or the groove portion to flow from a radially inner side to the outer side of the second rotating member (30) is generated as the second rotating member (30) rotates, and
a portion of the second rotating member (30) on the radially inner side includes a hole (31h) which allows gas to flow from outside into a space between the second rotating member (30) and the first rotating member (20).

8. The torque fluctuation absorbing device according to any one of claims 1 to 7,
wherein the second rotating member (30) has a structure which blocks heat on a heat transfer path from the friction surface (31e) to the damper portion (40).

9. The torque fluctuation absorbing device according to any one of claims 1 to 8,
wherein the second rotating member (30) includes:
a plate (31) having the friction surface (31e);
a disc (32) to which rotational power of the damper portion (40) is transmitted and which is connected to the plate (31); and
a heat insulation material (34) which is interposed between the plate (31) and the disc (32).

10. The torque fluctuation absorbing device according to any one of claims 1 to 9,
wherein the second rotating member (30) has a structure in which a surface area thereof on a surface facing the first rotating member (20) is greater than that in a flat state.

## Patentansprüche

1. Drehmomentschwankungsabsorbierende Vorrichtung (1) mit:
einem ersten Drehbauteil (20), das drehbar angeordnet ist;
einem zweiten Drehbauteil (30), das so angeordnet ist, dass es sich relativ zu dem ersten Drehbauteil (20) dreht, und eine Reibungsoberfläche (31e) aufweist, die mit einem vorherbestimmten anderen Bauteil als dem ersten Drehbauteil (20) reibschlüssig in Eingriff ist;
einem Dämpferabschnitt (40), der in dem ersten Drehbauteil (20) untergebracht ist und schwankendes Drehmoment, das durch Torsion zwischen dem ersten Drehbauteil (20) und dem zweiten Drehbauteil (30) verursacht wird, absorbiert; und
einem Wärmeübertragungsvermeidungsabschnitt (23d), der eine Übertragung von Wärme, die in der Reibungsoberfläche (31e) erzeugt wird, an das erste Drehbauteil (20) vermeidet,
**dadurch gekennzeichnet, dass**
eine Oberfläche des ersten Drehbauteils (20), die einem Abschnitt des zweiten Drehbauteils (30), in dem Strahlungswärme aufgrund von Wärme, die in der Reibungsoberfläche (31e) erzeugt wird, erzeugt wird, gegenüberliegt, den Wärmeübertragungsvermeidungsabschnitt aufweist,
bei der
der Wärmeübertragungsvermeidungsabschnitt (23d) eine Spiegeloberfläche ist.

2. Drehmomentschwankungsabsorbierende Vorrichtung nach Anspruch 1, ferner mit:
einem Wärmedissipationsbeschleunigungsabschnitt (31g, 31h, 31i), der zwischen dem zweiten Drehbauteil (30) und dem ersten Drehbauteil (20) angeordnet ist und eine Dissipation der Wärme, die in der Reibungsoberfläche (31e) erzeugt wird, beschleunigt.

3. Drehmomentschwankungsabsorbierende Vorrichtung nach Anspruch 2,
bei der der Wärmedissipationsbeschleunigungsabschnitt (31g, 31h, 31i) eine Struktur aufweist, die eine Konvektion zwischen dem zweiten Drehbauteil (30) und dem ersten Drehbauteil (20) erzeugt.

4. Drehmomentschwankungsabsorbierende Vorrichtung nach Anspruch 2 oder 3,
bei der der Wärmedissipationsbeschleunigungsabschnitt (31g, 31h, 31i) eine Struktur ist, die eine Konvektion zwischen dem zweiten Drehbauteil (30) und dem ersten Drehbauteil (20) erzeugt.

5. Drehmomentschwankungsabsorbierende Vorrichtung nach einem der Ansprüche 2 bis 4, bei der der Wärmedissipationsbeschleunigungsabschnitt (31g, 31h, 31i) in der Oberfläche des zweiten Drehbauteils (30), die dem ersten Drehbauteil (20) gegenüberliegt, vorgesehen ist.

6. Drehmomentschwankungsabsorbierende Vorrichtung nach einem der Ansprüche 2 bis 5, bei der der Wärmedissipationsbeschleunigungsabschnitt (31g, 31h, 31i) ein Vorsprung oder ein Nutabschnitt ist, der in dem zweiten Drehbauteil (30) vorgesehen ist.

7. Drehmomentschwankungsabsorbierende Vorrichtung nach Anspruch 6,
bei der das zweite Drehbauteil (30) eine ringförmige Form aufweist, so dass Konvektion, die durch den Vorsprung (31g, 31i) oder den Nutabschnitt geführt wird, so dass sie von einer radial inneren Seite zu der äußeren Seite des zweiten Drehbauteils (30) strömt, erzeugt wird, wenn sich das zweite Drehbauteil (30) dreht, und
ein Abschnitt des zweiten Drehbauteils (30) auf der radial inneren Seite ein Loch (31h) aufweist, das Gas erlaubt, von außen in einen Raum zwischen dem zweiten Drehbauteil (30) und dem ersten Drehbauteil (20) zu strömen.

8. Drehmomentschwankungsabsorbierende Vorrichtung nach einem der Ansprüche 1 bis 7, bei der das zweite Drehbauteil (30) eine Struktur aufweist, die Wärme auf einem Wärmeübertragungsweg von der Reibungsoberfläche (31e) zu dem Dämpferabschnitt (40) blockiert.

9. Drehmomentschwankungsabsorbierende Vorrichtung nach einem der Ansprüche 1 bis 8, bei der das zweite Drehbauteil (30) aufweist:
eine Platte (31), die die Reibungsoberfläche (31e) aufweist;
eine Scheibe (32), an die Drehleistung des Dämpferabschnitts (40) übertragen wird und die mit der Platte (31) verbunden ist; und
ein Wärmeisolationsmaterial (34), das zwischen der Platte (31) und der Scheibe (32) eingefügt ist.

10. Drehmomentschwankungsabsorbierende Vorrichtung nach einem der Ansprüche 1 bis 9, bei der das zweite Drehbauteil (30) eine Struktur aufweist, in der eine Oberflächenfläche davon auf einer Oberfläche, die dem ersten Drehbauteil (20) gegenüberliegt, größer als jene in einem flachen Zustand ist.

## Revendications

1. Dispositif d'absorption de fluctuation de couple (1) comprenant :
un premier élément rotatif (20) qui est disposé de manière rotative ;
un deuxième élément rotatif (30) qui est disposé pour tourner par rapport au premier élément rotatif (20) et présente une surface de friction (31e) qui est engagée par friction avec un élément prédéterminé autre que le premier élément rotatif (20) ;
une partie amortisseur (40) qui est logée dans le premier élément rotatif (20) et absorbe un couple fluctuant provoqué par une torsion entre le premier élément rotatif (20) et le deuxième élément rotatif (30) ; et
une partie évitant un transfert de chaleur (23d) qui évite un transfert de chaleur généré dans la surface de friction (31e) vers le premier élément rotatif (20),
**caractérisé en ce qu'**une surface du premier élément rotatif (20) qui fait face à une partie du deuxième élément rotatif (30) dans laquelle de la chaleur radiante est générée par la chaleur générée dans la surface de friction (31e), comprend la partie évitant un transfert de chaleur, où la partie évitant un transfert de chaleur (23d) est une surface miroir.

2. Dispositif d'absorption de fluctuation de couple selon la revendication 1, comprenant en outre :
une partie d'accélération de dissipation de chaleur (31g, 31h, 31i) qui est disposée entre le deuxième élément rotatif (30) et le premier élément rotatif (20) et accélère la dissipation de la chaleur générée dans la surface de friction (31e).

3. Dispositif d'absorption de fluctuation de couple selon la revendication 2,
dans lequel la partie d'accélération de dissipation de chaleur (31g, 31h, 31i) présente une structure qui génère une convection entre le deuxième élément rotatif (30) et le premier élément rotatif (20).

4. Dispositif d'absorption de fluctuation de couple selon la revendication 2 ou 3,
dans lequel la partie d'accélération de dissipation de chaleur (31g, 31h, 31i) est une structure qui génère une convection entre le deuxième élément rotatif (30) et le premier élément rotatif (20).

5. Dispositif d'absorption de fluctuation de couple selon l'une quelconque des revendications 2 à 4,
dans lequel la partie d'accélération de dissipation de chaleur (31g, 31h, 31i) est prévue dans la surface du deuxième élément rotatif (30) qui fait face au premier élément rotatif (20).

6. Dispositif d'absorption de fluctuation de couple selon l'une quelconque des revendications 2 à 5,
dans lequel la partie d'accélération de dissipation de chaleur (31g, 31h, 31i) est une saillie ou une partie de rainure qui est prévue dans le deuxième élément rotatif (30).

7. Dispositif d'absorption de fluctuation de couple selon la revendication 6,
dans lequel le deuxième élément rotatif (30) a une forme annulaire de sorte que la convection qui est guidée par la saillie (31g, 31i) ou la partie de rainure pour s'écouler d'un côté radialement intérieur vers le côté extérieur du deuxième élément rotatif (30) est générée lorsque le deuxième élément rotatif (30) tourne, et
une partie du deuxième élément rotatif (30) du côté radialement intérieur comprend un trou (31h) qui permet au gaz de s'écouler depuis l'extérieur dans un espace entre le deuxième élément rotatif (30) et le premier élément rotatif (20).

8. Dispositif d'absorption de fluctuation de couple selon l'une quelconque des revendications 1 à 7,
dans lequel le deuxième élément rotatif (30) a une structure qui bloque la chaleur sur un trajet de transfert de chaleur de la surface de friction (31e) à la partie amortisseur (40).

9. Dispositif d'absorption de fluctuation de couple selon l'une quelconque des revendications 1 à 8, dans lequel le deuxième élément rotatif (30) comprend :
une plaque (31) ayant la surface de friction (31e) ;
un disque (32) auquel est transmise une puissance de rotation de la partie amortisseur (40) et qui est relié à la plaque (31) ; et
un matériau d'isolation thermique (34) qui est interposé entre la plaque (31) et le disque (32).

10. Dispositif d'absorption de fluctuation de couple selon l'une quelconque des revendications 1 à 9,
dans lequel le deuxième élément rotatif (30) a une structure dans laquelle une zone de surface sur une surface faisant face vers le premier élément rotatif (20) est supérieure à celle dans un état plat.
